Europäisches Patentamt

(19) European Patent Office

Office européen des brevets

(11) Publication number: **0 117 005**
**A2**

(12) **EUROPEAN PATENT APPLICATION**

(21) Application number: **84200199.2**

(22) Date of filing: **15.02.84**

(51) Int. Cl.³: **A 01 C 17/00**

(30) Priority: **16.02.83 NL 8300588**

(43) Date of publication of application:
**29.08.84 Bulletin 84/35**

(84) Designated Contracting States:
**AT BE CH IT LI SE**

(71) Applicant: **C. van der Lely N.V.**
**Weverskade 10 P.O. Box 26**
**NL-3155 ZG Maasland(NL)**

(72) Inventor: **Van der Lely, Ary**
**10a Weverskade**
**Maasland(NL)**

(72) Inventor: **Bom, Cornelis J. G.**
**16 Laan van Nieuw Rozenburg**
**Rozenburg(NL)**

(74) Representative: **Mulder, Herman et al,**
**Octrooibureau Van der Lely N.V. 10 Weverskade P.O. Box 26**
**NL-3155 ZG Maasland(NL)**

(54) A spreader.

(57) A spreader for granular and/or powdery material, such as fertilizer, comprises a hopper (2) from which material is supplied to distribution members (5,6) through outlet ports (103, 104, 105, 106). Two outlet ports are provided for each distribution member, these two ports being close to each other with their adjacent edges (127) being longer than their remote edges (126). This provides control over the spreading density of material ejected from the distrubution members (5, 6) over a defined sector. The outlet ports (103, 104, 105, 106) are provided in delivery members (101, 102) which have part-spherical walls (107). Each distribution member (5, 6) comprises a plate having ejection blades (67), the plate being at least 10 mm below the delivery member (101, 102). The inner ends of the ejection blades lie on a circle which extends below the outlet ports.

./...

FIG. 3

-1-

**A SPREADER**

This invention relates to a spreader for granular
and/or powdery material, comprising a hopper for
receiving material to be spread and a distribution
member which is rotatable about a rotary axis, the
hopper having at least two outlet ports which are
a short distance apart from each other for supplying
material from the hopper to the distribution member.

One object of the present invention is to enhance
the distribution of the material in order to obtain
a uniform distribution of the material on the surface
to be covered.

According to the present invention, the lengths
of the adjacent adges of the outlet ports are larger
than the lengths of the edges of the outlet ports
which are remote from each other.

With this shape of the outlet ports the material
is fed to the distribution member in a manner such
that the distribution pattern uniformly decreases
towards both sides so that, in practice, the
distribution patterns of neighbouring spreading
runs can be overlapped to achieve a uniform
distibution on the surface to be covered. Moreover,
.a large amount of material can be supplied per unit
time from the outlet ports, and the material can
be spread over a large width.

According to a further aspect of the present invention, the outlet port is provided in a wall portion which slopes upwardly from the rotary axis, and the distribution member comprises a plate disposed beneath the outlet port, the lowermost edge of the outlet port being at least about 10 mms from the plate, the distribution member further comprising at least one ejection blade whose end nearer the rotary axis lies substantially on a circle centred on the rotary axis of the distribution member, part of this circle lying directly below the outlet port.

With this construction a large flow rate of material from the hopper can be achieved, the material being advantageously received by the distribution member.

By these steps, a fixed direction of distribution from the distribution member about the rotary axis is obtained independently of the kind of material to be spread. When spreading different types of material, adjustment of various parts of the spreader is therefore not required. Thus the device can be simple and its use facilitated.

The reception by the distribution member of the material flowing from the outlet ports can be enhanced when the upper edge of an ejection blade of the distribution member extends substantially parallel to the hopper wall having the outlet ports.

The guidance of the material by the ejection blades can be enhanced if each ejection blade has a smooth curve, viewed in a direction parallel to the rotary axis, the concave side of the blade being directed to the front with respect to the normal direction of rotation of the distribution member. It is then advantageous to provide a curvature such that the end of the ejection blade furthest from the rotary axis is tangential to a radial line from the rotary axis of the distribution member.

In order to maximize the reception of the material issuing from the outlet ports by the ejection blades of the distribution member a deflecting hood is provided above the distribution member so as to slope downwardly and radially outwardly. The particles not correctly captured by an ejection blade are captured by the deflecting hood and fed back to the ejection blade so that it can spread the material in the desired manner.

Spreading the material in the fixed angle of distribution about the rotary axis of the distribution member can be optimized by providing around part of the circumference of the distribution member a cover member, the lower edge of which is lower than the underside of an end of an ejection blade and which is provided with a rim which slopes downwardly and inwardly towards the rotary axis. The inclined rim constitutes a retaining rim for the material carried along by the cover member. The rim prevents the material flowing along the member from dropping out of the member. In this way the material is carried along to the end of the guide member by the distribution member and spread in the desired manner in the desired direction.

A construction embodying the present invention can be advantageously used in a spreader comprising two distribution members rotating in opposite senses, which spread the material symmetrically with respect to one another on the same strip of land.

In order to enable relatively large amounts of material to be spread in each run over a large width, the frame has a rugged structure and is provided with an extension part so that the capacity of the hopper can be increased in a simple manner. Preferably the extension part comprises walls hwich are in line with the upper walls of the hopper, which converge upwardly.

0117005

-4-

For a better understanding of the present invention, and to show how it may be carried into effect, reference will now be made, by way of example, to the accompanying drawings, in which;

Figure 1 is a side elevation of a spreader;

Figure 2 is a front view of the spreader of Figure 1;

Figure 3 is a plan view of the spreader with parts omitted;

Figure 4 shows on an enlarged scale part of the plan view of Figure 3;

Figure 5 is a sectional view of an ejection blade of the spreader, taken on the line V-V in Figure 4;

Figure 6 is another sectional view of the ejection blade, taken on the line VI-VI in Figure 4;

Figure 7 is a partly sectional view taken in the direction of the arrow VII in Figure 4;

Figure 8 is a view taken in the direction of the arrow VIII in Figure 7;

Figure 9 is a sectional view of part of a distribution member and adjoining guide members of the spreader;

Figure 10 is a schematic representation of a distribution pattern;

Figure 11 is a sectional view taken on the line XI-XI in Figure 4;

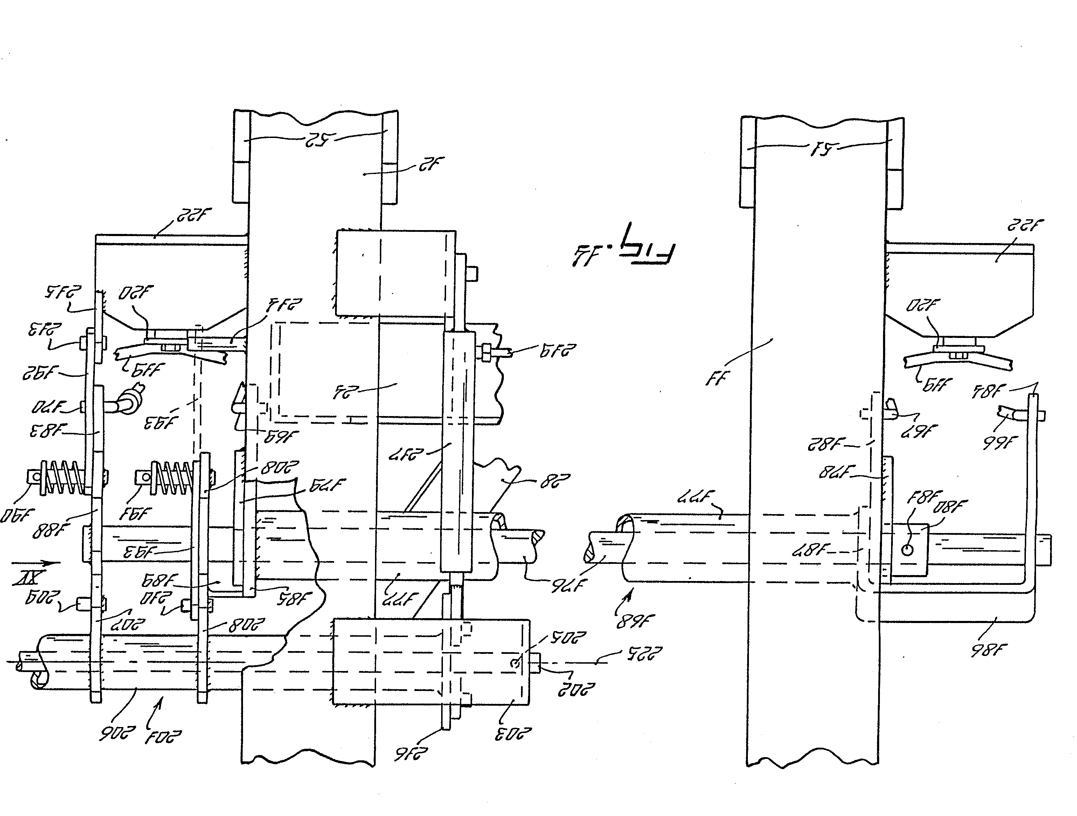

Figure 12 is a view taken in the direction of the arrow XII in Figure 11;

Figure 13 is a plan view of an adjusting mechanism of the spreader;

Figure 14 is a view taken in the direction of the arrow XIV in Figure 13;

Figure 15 is a view taken in the direction of the arrow XV in Figure 13.

The spreader shown in the drawings comprises a frame 1 on which a hopper 2 is mounted. The hopper 2 has two delivery spouts 3 and 4, below which are situated distribution members 5 and 6.

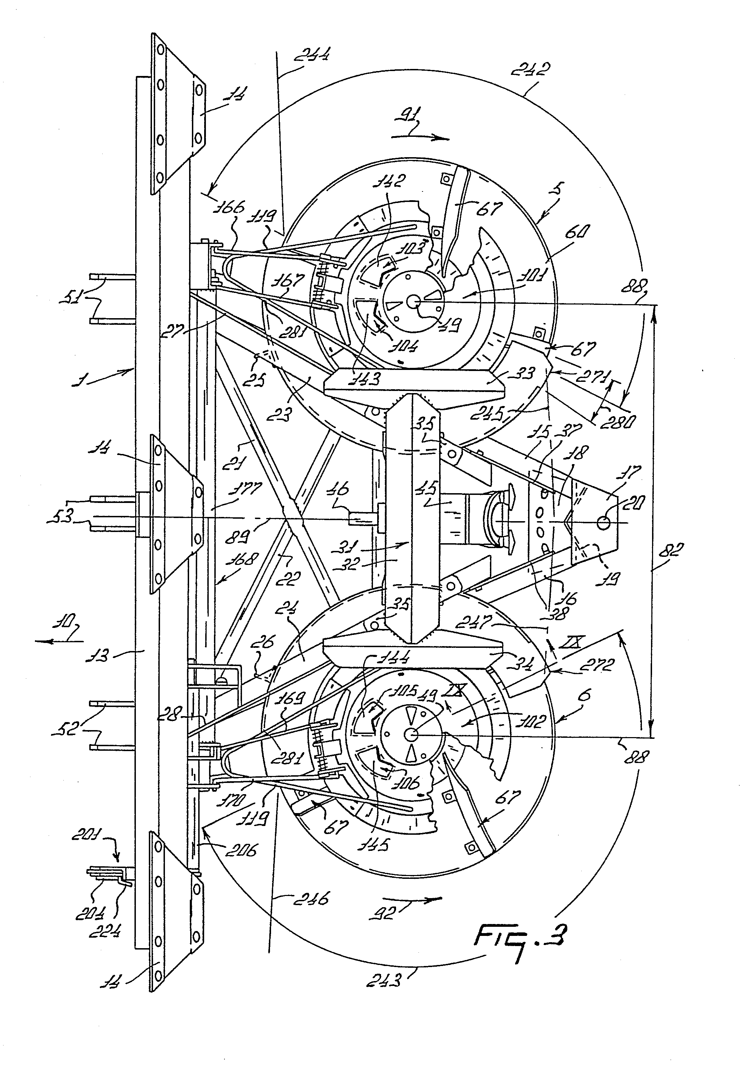

The frame 1 comprises main frame posts 11 and 12, which are vertical when the spreader is upright and which are spaced apart from each other across the width of the spreader. The posts 11 and 12 are parallel to each other. At the top ends of the posts 11 and 12 there is a supporting beam 13 which is provided with fastening plates 14, to which the hopper 2 is fastened. Near the lower ends of the posts 11 and 12 there are lower beams 15 and 16 which converge to the rear with respect to the normal intended direction 10 of operative travel of the spreader. The rear ends of the beams 15 and 16 are interconnected by a horizontal plate 17. The plate 17 is disposed on the top faces of the lower beams 15 and 16. The undersides of the beams 15 and 16 are interconnected by a plate 18. Between the plates 17 and 18 there is an intermediate plate 19 which is bent at an angle when viewed on plan, as is shown in Figure 3. The plates 17 and 18 have aligned holes 20. The lower beams 15 and 16 are also interconnected by struts 21 and 22, the front ends of which are connected to the lower beams 15 and 16 and to the posts 11 and 12. The rear ends of the struts 21 and 22 are fastened to the lower beams 15 and 16 approximately midway along their length.

Approximately half way up the posts 11 and 12 are fastened carrying arms 23 and 24. These carrying arms converge towards the rear away from the posts 11 and 12 and are substantially parallel to the respective beams 15 and 16. The carrying arms 23 and 24 are connected to the lower beams 15 and 16 by tie beams 25 and 26, which constiute carrying members and extend vertically at a relatively short distance from the beams 11 and 12. The carrying arms 23 and 24 are connected to the posts 11 and 12 by struts 27 and 28.

The carrying arms 23 and 24 are interconnected near their rear ends by a support 31. The support 31 comprises a central support 32, which is parallel to the beam 13, and side supports 33 and 34 at the ends of the support 32, these side supports extending int he direction 10. The central support 32 is provided with lugs 35 by which the support 31 is secured to the tops of the carrying arms 23 and 24. The rear ends of the carrying arms 23 and 24 are connected by tie strips 37 and 38 to the rear ends of the lower beams 15 and 16.

On the underside of the central support 32 are provided fastening arms 41 and 42. A hollow beam 43 is secured to the lower ends of these fastening arms 41 and 42 by fastening brackets 44. The hollow beam 43 is interrupted by a change-speed gear box 45 disposed in the middle of the machine. The gear box 45 has an input shaft 46 which projects forwardly from the front of the gear box with respect to the direction 10. At its ends, the hollow beam 43 carries gear boxes 47 and 48 receiving shafts 49 which extend upwards. Gear wheels in the box 45 are connected by shafts in the hollow beam 43 with gear wheels in the gear boxes 47 and 48.

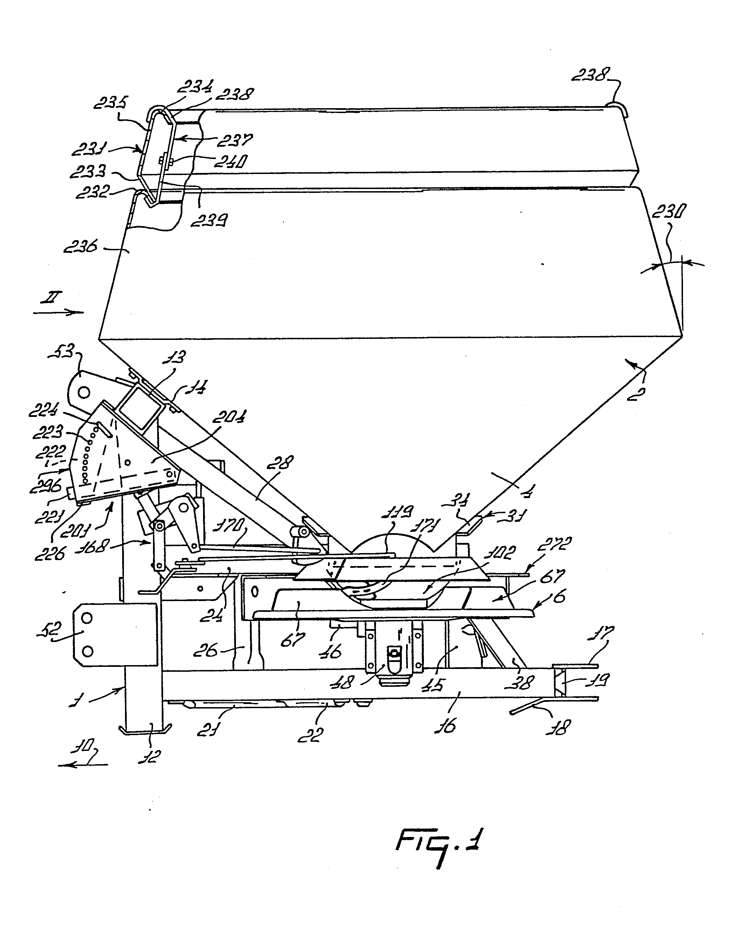

The posts 11 and 12 have forwardly extending fastening lugs 51 and 52 respectively. The supporting beam 13 is provided in the middle with fastening lugs 53 which project to the front as can be seen in Figure 1.

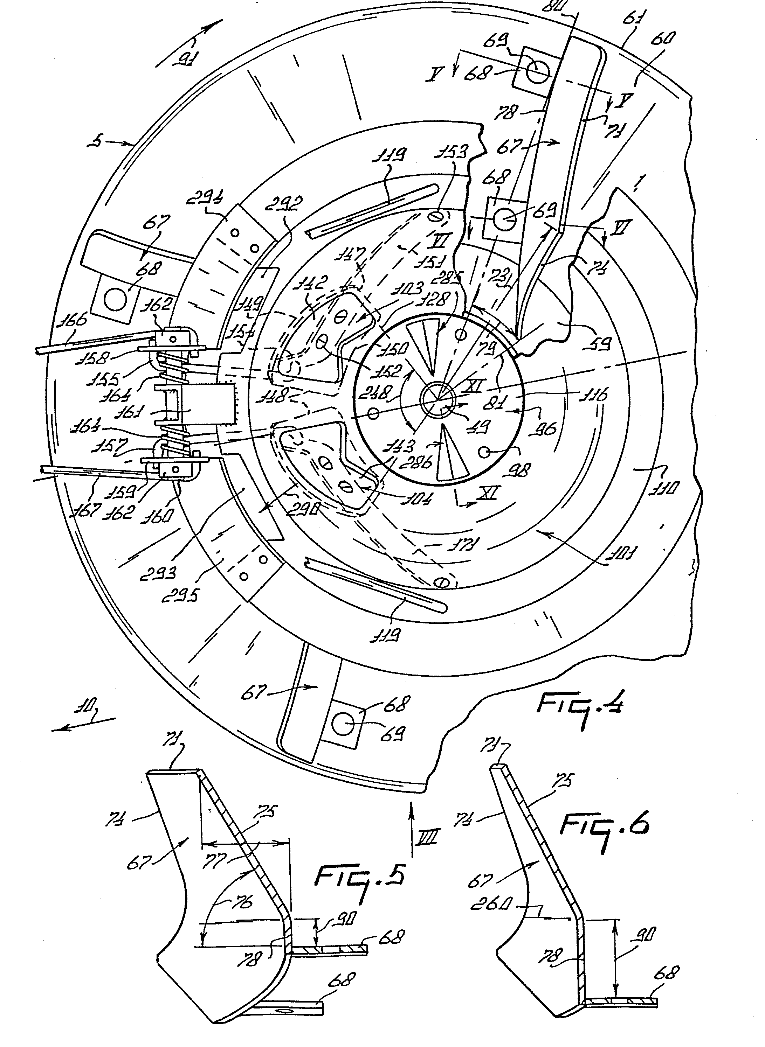

As shown in Figure 7, a fastening ring 56 is secured to the shafts 49. The respective distribution members 5 and 6 are mounted on the rings 56. Each ring 56 is at right angles to its shaft 49 and has on the underside a protective collar 57, which surrounds the top end of the gear box 47.

A central portion 58 of the distribution member 5 engages the top of the fastening ring 56. The central portion 58 is also normal to the shaft 49 and has a diameter equal to that of the ring 56. At its outer edge, the portion 58 meets a conical portion 59 which is flared downwardly away from the portion 58. At its lower edge, the conical portion 59 meets a carrying portion 60. The surface 60 is conical. The conical collecting portion 59 is inclined at an angle 54 of about 25° to a plane normal to the shaft 49. The conical carrying portion 60 is inclined at an angle 55 of about 7° to a plane normal to the shaft 49. The distribution member is provided at the periphery of the portion 60 with a downwardly directed circumferential rim 61, the lower edge of which lies in a plane 63 which is normal to the shaft 49. In this plane is approximately located the lower edge 62 of the conical portion 59. The central portion 58 is located at a distance 64 of about 25 mm above the lower edge 62. The top 65 of the rim 61 is at a slightly lower level than the plane 66 going through the upper surface of the central portion 58.

The top surfaces of the portions 59 and 60 are provided with ejection blades 67. In the illustrated embodiment there are four ejection blades 67 on each distribution member 5, 6. The blades 67 have tags 68 by which they are fastened by means of bolts 69 and nuts 70 to the portion 60 of the distribution member 5. The top edge 71 of each ejection blade lies in a plane at right angles to the shaft 49 and parallel to the plane 66. The top edge 71 is at a distance 72 (greater than the distance 64) above the plane 66. The top edge 71 is about 5 cms above the plane 66. Each blade 67 terminates near the outer rim 61 of the distribution member. The end of the rim 61 nearest the shaft 49 is spaced from the centre line 86 of the shaft 49 by a distance which is greater than half the diameter 84 of the lower edge 62. From the upper edge 71, a curved inner edge 74 of the ejection blade extends downwardly to near the conical portion 59.

As seen in cross-section, each ejection blade has a straight wall portion 75 which is inclined at an angle 76 of about 60° to the horizontal, i.e. to the plane normal to the shaft 49. The wall 75 extends forwardly, with respect to its direction of operative rotation 91, over a distance 77 of about 25 mms. At its bottom edge, the inclined wall portion 75 meets a lower wall portion 78 which is substantially at right angles to the plane 60 (Figure 5). Each ejection blade is smoothly curved over its length as is shown in Figure 4. The lower wall portion 78 has a height 90 which varies along the length of the ejection blade and is about 1 cm near the outer periphery of the distribution member. Above the edge 62, the height 90 is about 3 cms. The ejection blade is curved so that its two ends subtend an angle 79 of about 30° at the centreline 86, as indicated by the radial lines 80 and 81. The radial line 80 is tangential to the rear face of the lower wall portion 78 of the blade at the point where the blade is furthest from the shaft 49. The ejection blade 67 is curved so that with respect to the normal direction of rotation 91 of the distribution member 5 the concave side of the curvature is forwardly directed.

The distribution member 6 is identical to the distribution member 5 and rotates in the direction 92. The directions 91, 92 of rotation of the distribution members 5 and 6 are opposite one another.

The ejection blades of the distribution member 6 are disposed and shaped symmetrically to the ejection blades 67 of the distribution member 5. The distribution members 5 and 6 are at the same height as each other and the distance 82 between the centre-lines 86 of their rotary shafts 49 is in this embodiment about 90 cms. This distance 82 is about one and a half times the diameter 83 of each distribution member. The diameter 83 is about two and a half times the diameter 84 of the lower edge 62. The central portion 58 has a diameter 85 equal to about one quarter to one fifth of the diameter 83. The centre lines 86 of the shafts 49 lie in longitudinal planes 88 which extend in the direction 10 and are vertical when the spreader is upright. The planes 88 contain the centre lines of the posts 11 and 12, these posts thus being positioned directly in front of the shafts 49 of the distribution members with respect to the direction 10.

The distribution members 5 and 6 are situated below cylindrical lower ends of the delivery spouts 3 and 4, for example, the lower end 87 (Figure 7) of the delivery spout 3. The axes 86 coincide with the centre lines of the lower ends 87 of the delivery spouts 3 and 4 located above the distribution members 5 and 6 respectively.

The central portions 58 of the distribution members are provided with floor members 96 having a height 97 of about 25 mms. The central portion 58, the protective collar 57 and the floor member 96 are fastened to one another by three bolts 98 which extend through holes in the collar 57, the fastening plate 56 and the central portion 58 and are screwed into tapped holes in the floor member 96. The floor member 96 has a cylindrical outer periphery with a diameter substantially equal to the diameter of the central portion 58 which in this embodiment is a few millimetres larger than the diameter 85.

Between the delivery spouts 3 and 4 and the distribution members 5 and 6 disposed below them are situated delivery members 101 and 102. Each of the delivery members 101 and 102 has two outlet ports 103 and 104, 105 and 106 respectively. The delivery members 101 and 102 are of identical construction and consequently only the member 101 will be described in detail, with reference to Figures 4, 7 and 8.

The delivery member 101 comprises a curved wall portion 107. The wall portion 107 is part-spherical such that each point of the inner surface of the wall portion 107 is at the same distance 108 from a centre 109. The centre 109 lies on the rotary axis 86 of the distribution member 5. The upper edge 110 and lower edge 111 of the delivery member 101 lie in parallel planes 112 and 113. The planes 112 and 113 are normal to the rotary axis 86 and are both spaced apart by the same distance from the centre 109. The wall portion 107 is formed, so as to speak, by a broad band of a spherical member. The delivery member 101 has a height 114 of about 90 cms in this embodiment. The lower edge 111 constitutes the edge of a circular opening 100 of the delivery member 101 and is located in an angular recess 115 on the top of the floor member 96. The top face 116 of the floor member 96 is disposed within the opening 100 and is flush with the inner surface of the wall portion 107 at the opening 100. The top face 116 of the floor member 96 constitutes the floor of the delivery member 101. At the top, the delivery member surrounds the outside of the cylindrical lower end 87 of the delivery spout 2. The upper edge of the delivery member overlaps the lower end 87 by a distance 117 of about 10 mms. There is a clearance 118 of a few millimetres between the lower end 87 and the delivery member 101. The delivery member 101 is completely free of the lower end 87 and bears on the floor member 96. The delivery member 101 is provided with a fixing bracket 119, which extends towards the front with respect to the direction 10. The bracket 119 has a tag 120 provided with a downwardly extending pin 121. The pin 121 is received in an opening in a support plate 122 on the frame (Figures 13 and 15).

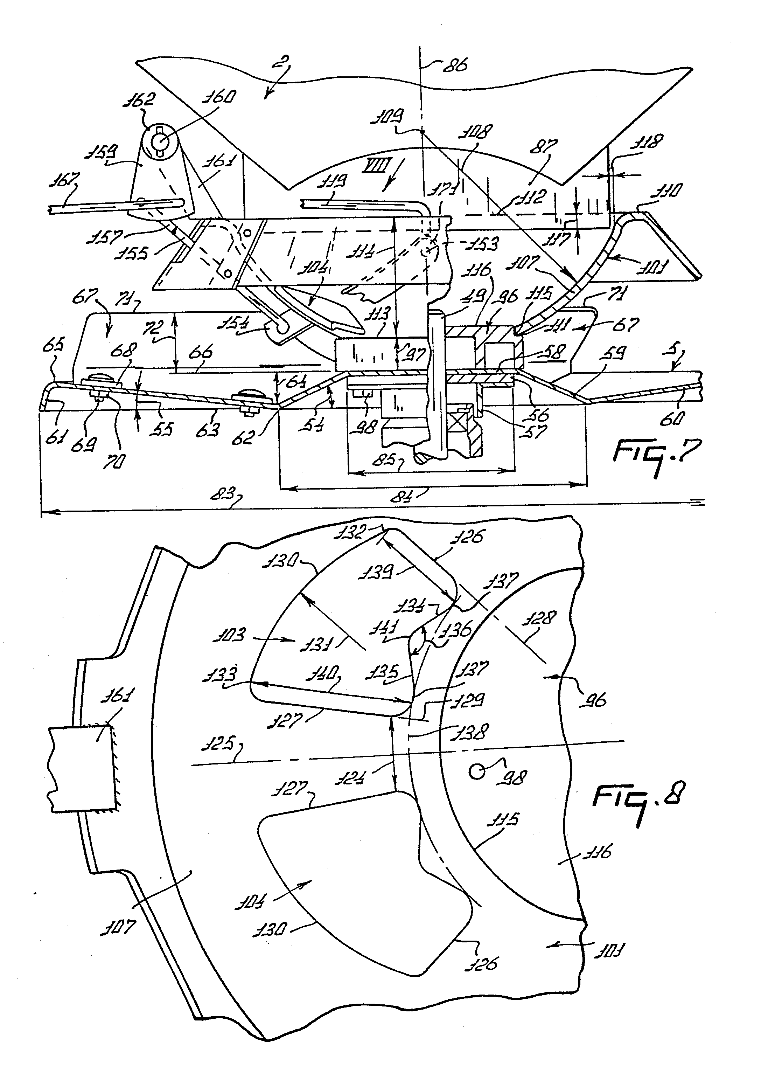

The outlet ports 103 and 104 in the delivery member 101 are spaced apart by a short distance 124. The outlet ports 103 and 104 are symmetrical about a plane 125 containing the axis 86 and the mid point of the distance 124. The shape of the outlet port 103 will be described in detail. The outlet ports 103 and 104 extend, as viewed in Figure 8, from point 109 at right angles to the middle between the ports 103 and 104. The outlet port 103 has two opposite edges 126 and 127 which lie in planes 128 and 129 containing the rotary axis 86. The edges 126 and 127 are interconnected by a top edge 130 of the outlet port. The top edge 130 is arcuate with a radius 131, the concave side facing into the port 103. The top edge 130 has a shape such that the end 132 which meets the edge 126 is at a lower level than the end 133 which meets the edge 127. The lower edge of the outlet port 103 comprises two portions 134 and 135 which are inclined at an angle 136 of about 115° to each other. The angle 136 opens away from the outlet port 103. The portions 134 and 135 are disposed so that the lowermost points 137 of these portions, which are connected by curved portions to the edges 126 and 127, lie on a common arc 138 centred on the axis 86. The portions 134 and 135 meet one another at a curved portion which is situated at substantially equal distances from the lower ends of the opposite edges 126 and 127. Since the top edge 130 slopes downwardly and since the portions 137 are at the same height as each other, the length 139 of the edge 126 is substantially half the length 140 of the edge 127.

For each of the outlet ports 103, 104, 105 and 106 there is a dosing slide 142, 143, 144 and 145 respectively. The dosing slides are substantially identical to each other and consequnetly only the dosing slide 102 of the outlet port 103 will be described in detail. The dosing slide 142 has edges 147 and 148 which are respectively substantially parallel to the edges 126 and 127 of the outlet port 103. The top edge 149 of the slide is curved in the same manner as the edge 130 of the outlet port. The slide has a lower edge 150 which is curved along the arc 138. The dosing slide 142 is slightly larger than the outlet port 103 so that the outlet port can be reliably covered by the dosing slide. The dosing slide 142 is rigidly secured by two bolts 152 to a carrying arm 151 of resilient strip material. The carrying arm 151 can turn about a pivotal shaft 153. The centreline of the pivotal shaft 153 passes through the centre 109 with the radius 108 defining the curvature of the wall portion 107 of the delivery member 101. The resilient carrying arm 151 is fastened to the pivotal shaft 153 in a manner such that it resiliently presses the slide against the wall 107 of the delivery member 101.

The carrying arm 151 has a protruding lug 154 to which a control rod 155 is pivoted. In the same manner the dosing slide 143 is coupled with a control rod 157. The control rods 155 and 157 are pivoted to control plates 158 and 159 respectively, which are rotatable about a shaft 160. The shaft 160 is rigidly secured to a support 161 fastened to the top edge 110 of the delivery member 101. Retaining rings 162 are rigidly secured to the shaft 160 on opposite sides of the control plates 158 and 159. Compression springs 164 surround the shaft 160 on the opposite sides of the control plates 158 and 159. One end of each spring 164 contacts the respective control plate and the other end contacts the support 161. The control plates 158 and 159 are connected by operating rods 166 and 167 respectively with an adjusting mechanism 168. It will be apparent that the dosing slides 142 and 143 like the ports 103 and 104 are disposed symmetrically about the plane 125.

The dosing slides 144 and 145 are shaped like the dosing slides 142 and 143 and are coupled in the same manner with the adjusting mechanism 168; the dosing slide 144 is coupled to the adjusting mechanism by the operating rod 169 corresponding with the operating rod 166. The slide 145 is coupled to the adjusting mechanism by an operting rod 170 corresponding with the rod 167. The dosing slide 143 is connected with a resilient carrying arm 171 in the same manner as the slide 142 is coupled with the carrying arm 151. The carrying arm 171 and the carrying arm 151 are disposed symmetrically about the plane 125. In the same manner the dosing slides 144 and 145 are movably connected by resilient carrying arms with the delivery member 102 so that further description of these parts is omitted.

The adjusting mechanism 168 comprises an adjusting shaft 176, about which an adjusting tube 177 is rotatable. The shaft 176 and the tube 177 are parallel to the frame beam 13 and are situated, with respect to the direction 10, just behind the posts 11 and 12, as will be apparent in particular from Figure 13. The adjusting shaft 176 is rotatably journalled in plates 178 and 179 which are fastened to the main posts 11 and 12. The adjusting shaft 176 is

-14-

prevented from shifting axially with respect to the plates 178 and 179 in a manner which is not shown. A sleeve 180 is rigidly secured to the shaft 176 by a pin 181. The outer circumference of the sleeve 180 is coaxial with the centre line 175 of the shaft 176 and is rotatable in an opening (not shown) in the plate 178.

An adjusting arm 182 is rigidly secured to the sleeve 180 and hence to the adjusting shaft 176. The adjusting arm 182 is in contact with the plate 178 and is pivotally coupled with the operating rod 167. At the other end of the shaft 176, that is to say, near the post 12, an adjusting arm 182 is rigidly secured to the shaft 176. The adjusting arm 182 is pivotally coupled with the operating rod 170 of the slide 145. The dosing slide 142 is pivotally coupled by the operating rod 166 with an adjusting arm 184 rigidly secured to the tube 177. The adjusting arm 184 is constituted by one limb of a U-shaped bracket 186, the other limb 187 of which is welded to the tube 177 near the adjusting arm 182. The dosing slide 144 is pivotally coupled by the operating rod 169 to an adjusting arm 185 which is rigidly secured to the tube 177. The arm 185 is in contact with the plate 179 with the result that the arms 185 and 187 prevent tube 177 from moving along the shaft 176 between the plates 178 and 179. The adjusting shaft 176 is provided with a coupling arm 188 (Figure 15) which, together with the adjusting arm 183 provides a bell-crank which is rigidly secured to the adjusting shaft 176. The tube 177 is provided with a coupling arm 189. The coupling arm 189 has an angular shape (Figure 13) and is rigidly secured to the adjusting arm 185. Pins 190 and 191 are rigidly secured to the coupling arms 188 and 189. These pins extend to corresponding sides of the coupling arms concerned.

Coupling links 192 and 193 are adapted to turn about the pins 190 and 191. The coupling links 192 and 193 are resiliently urged against the coupling arms 188 and 189 respectively by compression springs 194 and 195 respectively, which surround the pins 190 and 191. Each compression spring 194 and 195 is retained between the respective coupling link 192 and 193 and a ring 196 on the pins bearing on a pin 197.

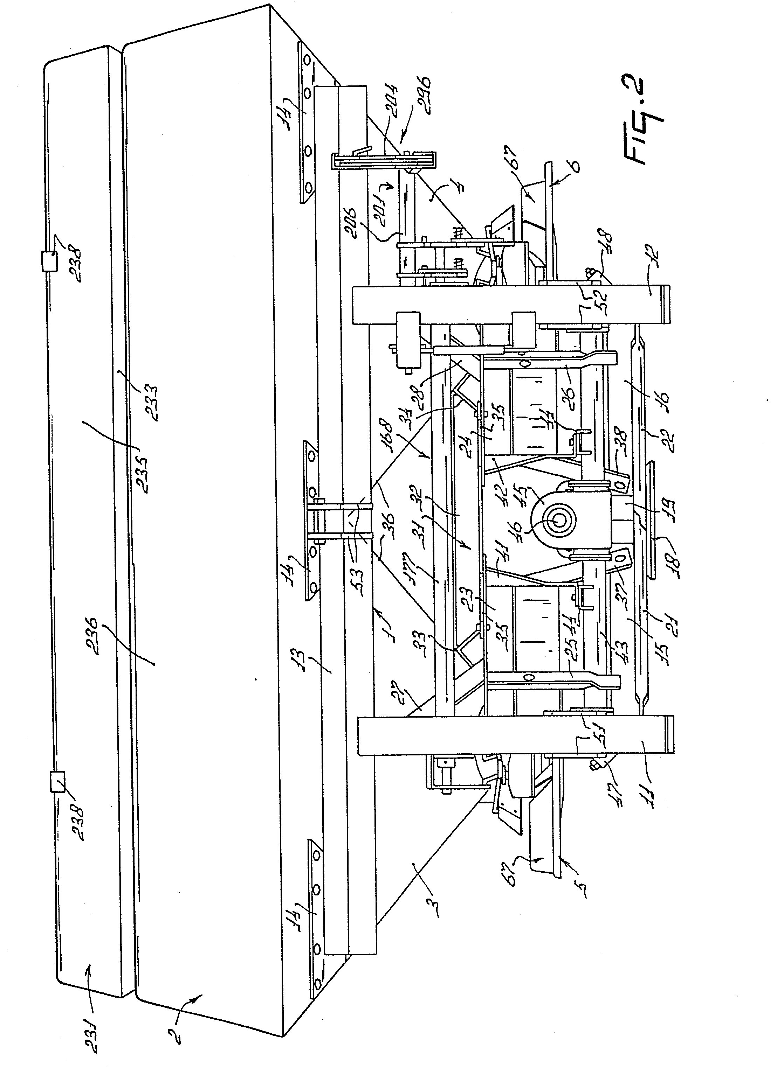

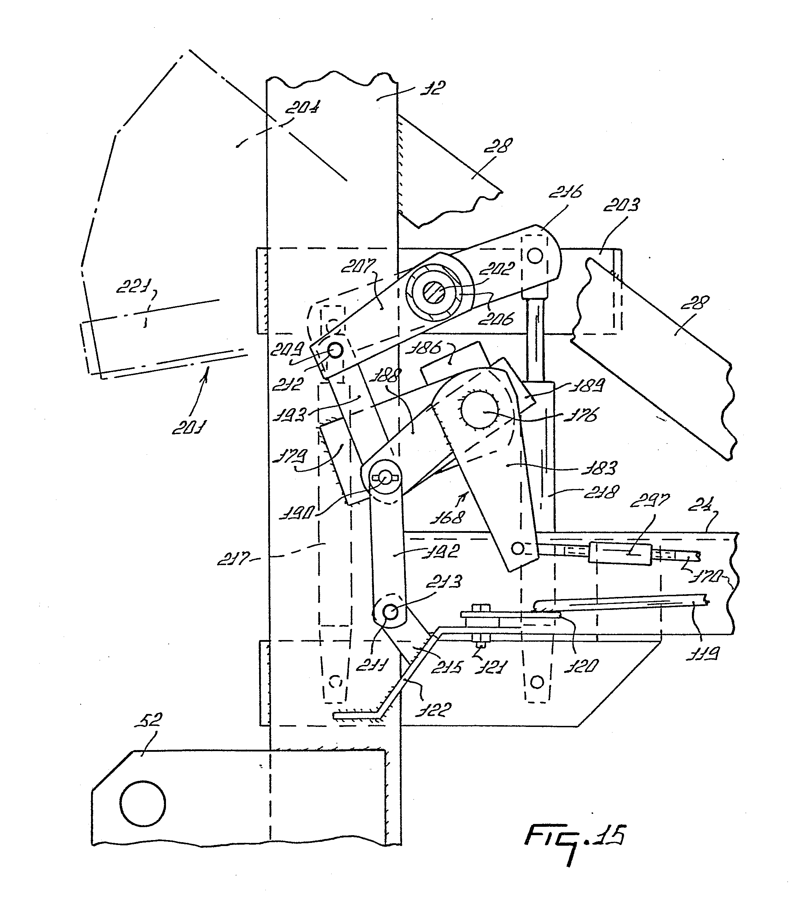

The adjusting mechanism 168 comprises a coupling mechanism 201 (Figures 13 to 15), which can be coupled with and decoupled from the adjusting shaft 176 and the adjusting tube 177 through the coupling links 192 and 193. The coupling mechanism 201 comprises a supporting shaft 202, one end of which is journalled in a frame bracket 203, which is rigidly secured to the post 12 and the carrying arm 24. The frame bracket 203 is mounted on that side of the post 12 facing the post 11. The other end of the supporting shaft 202 is journalled in an indexing plate 204 (Figures 1 and 2), which is fastened to the horizontal frame beam 13 at a position away from the post 12. The shaft 202 is held in its bearings against axial movement with respect to the frame 1 by pins 205, one of which is near the bracket 203 and the other near the indexing plate 204 in a manner not shown. A tubular coupling shaft 206 is rotatable on the supporting shaft 202 in bearings (not shown). The coupling shaft 206 is provided with control arms 207 and 208 (Figure 14) both of which are arranged on the opposite side of the post 12 remote from the post 11. The control arms 207 and 208 are provided with coupling pins 209 and 210 which are the same distance as each other from the common centre line 225 of the shaft 202 and the shaft 206. The control arms 207 and 208 can be coupled with the coupling arms 188 and 189 by the coupling links 192 and 193. For this purpose the coupling links 192 and 193 have holes 211 and 212 in which the respective pins 209 and 210 fit. For coupling the links 192 and 193 with the pins 209 and 210 the coupling links 192 and 193 can move transversely of their lengthwise direction against the pressure of the springs 194 and 195. The coupling links 192 and 193 can be fixed to respective fastening pins 213 and 214 in the position in which they are decoupled from the control arms 207 and 208. The pins 213 and 214 are arranged on the supporting plate 122 and on the post 12 respectively. The pin 213 is connected by a lug 215 to the supporting plate 122.

The coupling shaft 206 is provided with a lifting arm 216 which extends for equal distances on both sides of the coupling shaft. On both sides of the coupling shaft 206 the lifting arm 216 is coupled with actuating members 217 and 218. These actuating members comprise single-acting hydraulic cylinders. The hydraulic cylinders are coupled through ducts 219 and 220 with control members for selectively supplying hydraulic fluid to one or other of the cylinders. The coupling shaft 206 is provided near the indexing plate 204 with a stop arm 221. The end of the arm 221 is located in a slot-like gap formed between the plate 204 and a guide strip 222. The guide strip 222 and the plate 204 have holes 223. A stop pin 224 can be inserted selectively through one of the holes 223 in the plate 204 and the strip 222. The lower end 226 of the strip 222, connected with the plate 204, constitutes a fixed stop for the stop arm 221, whereas the plate 204 constitutes an adjustable stop for the arm 221.

The spreader is provided with a hopper extension 231 for the hopper 2. The hopper extension 213 has, as viewed on plan, a rectangular shape correspond- with that of the top of the hopper 2. The top of the hopper 2 has inwardly and downwardly inclined, bent-over rims 232 which match by inwardly and downwardly inclined rims 233 of the hopper extension 231 as is shown in Figure 1. The top of the hopper extension has a bent-over rim 234 corresponding with the rim 232. The hopper extension 231 has such a shape and construction that its wall 235 is in line with the top wall 236 of the hopper 2. The top wall 236 of the hopper 2 is inclined so that it is upwardly convergent. In this embodiment the wall 236 is at an angle 230 of 15° to the vertical when the spreader is upright. The hopper extension 231 is secured to the hopper 2 by means of a fastening bracket 237. The bracket 237 comprises two relatively movable clamping hooks 238 and 239. The hooks can be rigidly fixed together by a bolt 240 as is shown in Figure 1. The bolt 240 passes through slots (not shown) in the two parts 238 and 239 for fitting the hooks around the rims 232, 233 and 234 respectively.

The spreader comprises cover members 271 and 272 which cooperate with the distribution members 5 and 6 respectively. Also, by-pass hoods 261 and 262 are provided above the distribution members 5 and 6. These cover members and hoods will be described later in this description.

The spreader is coupled for operation with the lifting arms of the lifting device of a tractor or a similar vehicle, for which purpose the fastening lugs 51 and 52 are provided on the posts 11 and 12 of the frame. The lugs 53 are coupled with the top rod of the lifting device. The power take-off shaft of the tractor is coupled by an auxiliary shaft with the input shaft 46 of the gear box 45. The input shaft 46 is connected by gear wheel transmissions in the box 45 with drive shafts disposed in the hollow beam 43. These drive shafts, in turn, are coupled by gear wheel transmissions in the gear boxes 47 and 48 with the shafts 49 of the distribution members 5 and 6. In this way the distribution members 5 and 6 can be rotated from the power take-off shaft of the tractor. The various transmission members are arranged so that the distribution members can be driven in opposite senses during operation, in the direction of the arrows 91 and 92. The speed of rotation of the distribution members can be controlled by varying the transmission ratio in the gear box 45. For this purpose the gear wheels in the gear box 45 are exchangeable wheels, although this is not shown in detail.

The material to be distributed in operation is fed from the hopper 2 through the delivery spouts 3 and 4 to the distribution members 5 and 6 located below them. The material flows from the delivery spouts 3 and 4 through their cylindrical lower ends 87 to the delivery members 101 and 102. These delivery members have the outlet ports 103, 104 and 105, 106 respectively. Through these outlet ports the material flows down around the periphery of the cylindrical floor member 96 to reach each distribution member 5 and 6 mainly at the conical receiving part 59. The downwardly flowing material reaching the part 59 is engaged by the ejection blades 67, which discharge it.

The diameter 83 of the distribution members, their speed of rotation about their rotary axes 86, the shape of the ejection blades 67, and the place where the material is fed through the outlet ports to the distribution members are designed so that each of the distribution members 5 and 6 spreads the material mainly to the rear with respect to the direction 10. Each of the distribution members spreads the material over substantially equal distances to both sides of the longitudinal plane 89 during a run of the spreader. The two distribution members thus spread the material over the same strip of land during travel. During operation the distribution members rotate in opposite senses so that at their regions of closest approach the distribution members move in the direction of the arrow 10. The outlet ports 103 and 104 and the outlet ports 105 and 106 are located symmetrically aobut the plane 89 and in front of the axes 49. Therefore, the distribution members spread the material symmetrically about the plane 89. This results in a very satisfactory distribution of the material over the strip of ground to be covered during the run. During the run of the spreader, each of the distribution members can spread the material over a large width. For spreading over relatively large widths the distribution members can be rotated at high speed, for example, at about 1100 rev/min. If a smaller spreading width is desired, the speed of rotation of the distribution members can be reduced so that the material will cover a narrower strip. In particular, because the material is uniformly spread over very large widths, it is possible to attain an effective spreading width of about 24 metres. With a normal travelling speed of, for example, about 7 to 8 kms/hour it has to be possible to maintain a very high rate of flow of material through the outlet ports, if it is desired to spread many kilograms per hectare in each run. Furthermore the large rate of flow of material through the outlet ports has to be effectively received by the distribution members so that each distribution member has to be capable of uniformly spreading large flow rates of material. For this purpose the outlet ports 103 to 106, as is shown in the drawings, are shaped in a particular manner in the specifically curved walls 107. Moreover, for this purpose, the distribution members are not too far below the outlet ports. The distance between the outlet ports and the rotary axes 86 is also important. The diameter 84 of the conical part 59 is, therefore, chosen with respect to the location fo the outlet ports so that distance of the outlet ports from the rotary axes 86 is substantially equal to the diameter 84. The lower edge 62 is, therefore, located substantially below the part 133 of the outlet port which is furthest from the axis 86. The diameter 84 is preferably within the limit of the diameter 83. Preferably the diameter 84 is not more than abo ut 30 cms. An advantageous diameter, as in the present embodment, is about 23 cms. The diameter 83 of the ejection blade is preferably smaller than 75 cms and larger than 45 cms; in this embodiment the diameter 83 is about 58 cms.

The outlet ports are located at such a height above the receiving parts 59 and the carrying surfaces 60 of the distribution member that the flow of material from the hopper through the outlet port is not hindered by the material arriving at the surfaces 59 and 60. Therefore, the outlet ports are located at a given distance above the conical parts 59 and 60. The central surface 58 and hence the top of the part 59 are, therefore, arranged at a given distance below the lower edges 137 of the outlet ports. The floor member 96 has a height 97 of, preferably, about 25 mms. This height 97 is preferably not much smaller than about 15 mms. Apart from other practical considerations with respect to a sufficient flow of material to the conical surface 59 of the distribution member, when the machine is in an inclined position, the height 97 has a less limited maximum value, but preferably it is not greater than about 40 mms.

The height of each ejection blade 67 is such that the top edge 71 is substantially at the same level as the centres of the outlet ports. Viewed from the side as shown in Figure 7, the edge 71 is located substantially midway up the outlet port, measured vertically. It is advantageous for the top edge 71 to be perpendicular to the rotary axis 86 of the distribution member. The top edge of each ejection blade is preferably a given distance form the wall 107 of the delivery members. The curved inner top edge 74 is at a distance 341 from the wall part 107 which is preferably not smaller than about 10 mms, in order to prevent the blade from moving so near to the outlet ports during operation that the flow of material through the outlet ports could be hindered to an extent such that the flow rate of material through the outlet port is reduced. The distance 241 is preferably not larger than about 40 mms so that satisfactory reception by the ejection blade of material issuing from the outlet port can be ensured. An effective reception of material by the ejection blades improves the distribution of the material by the distribution member. When the material is effectively received by the ejection blades in the region of the outlet ports, the spreading sector of the material at the circumference of the distribution member is substantially invariable irrespective of the kind of material to be spread. The inner top edge 74 is preferably shaped in a form such that it is substantially parallel to the wall 107.

The relative locations of the wall 107 with the outlet ports and the distribution member concerned and the above-mentioned dimensions of the various parts are chosen so that during operation the material leaves the distribution members through a circumferential angle of the distribution members of about 180°. The distribution members 5 and 6 spread the material in circumferential angles 242 and 243 (Figure 3). In order to spread the material over a maximum width, the locations of these circumferential angles 242 and 243 are preferably such that at the limits of these spreading sectors the material is ejected in directions substantially normal to the direction 10 of the device. Thus at the edges of the spreading sectors the material is ejected in the directions 244 and 245 by the distribution member 5 and in the directions 246 and 247 by the distribution member 6. The various dimensions are chosen so that the distribution members 5 and 6 eject the material in directions parallel to the axes 86 and symmetrical about the plane 89 going through the longitudinal centre line of the device. The positions of the sectors 242 and 243 are determined not only by the shape and size of the distribution members 5 and 6 and the distance between them and the delivery members, but also by the location of the outlet ports around the rotary axes 86. The outlet ports 103 and 104 and the outlet ports 105 and 106 are disposed symmetrically about the plane 89. The positions of the ports are such that the edges 127 of the outlet ports 104 and 105 lie in the planes 88 which contain the rotary axes 86 of the distribution members and the centre lines of the delivery members and are parallel to the plane 89 in the direction 10. In order to enable distribution of the material in the spreading sectors 242 and 243 of 180° with the chosen magnitudes of the distribution members the material is fed in a given sector around and at a given distance from the rotary axes 86 of the distribution members. For this purpose the outlet ports 103, 104 and 105, 106 are disposed in sectors 248 around the axes 86 (Figure 4). In this embodiment the angle 248 is about 100°. However, this angle may vary with the distance of these outlet ports from the rotary axes 86 and with the shape and size of the distribution members. The angle 248 is preferably not larger than about 135° and not smaller than about 65°.

The material is preferably spread by each of the distribution members in a manner such that each of the distribution members provides a distribution pattern 255 as shown in Figure 10. Viewed in a plane at right angles to the surface to be covered and looking in the direction 10, the distribution pattern is triangular and extends on both sides of the plane 89 over equal distances 249. The distrbution pattern 255 has uniformly extending sides 250 and 251. The material can be spread very uniformly on the surface to be covered by carrying out adjacent spreading runs in a manner such that the material is spread in distribution patterns 256 and 257 indicated by broken lines in Figure 10. The planes of symmetry of these triangular distribution patterns 256 and 257 lie in planes 253 and 254 going through the ends of the distribution pattern 255 of the first spreading run indicated by solid lines. The distribution patterns 256 and 257 of neighbouring spreading runs then overlap half 249 of the overall width 252 of a distribution pattern 255. Thus a uniform overall distribution pattern is obtained, which is indicated in Figure 10 by the line 258. Each of the distribution patterns 255, 256 and 257 is very uniform in itself, since they are each obtained by two distribution members 5 and 6 spreading the material symmetrically about the plane 89 on the same strip 252 in a distribution pattern 255.

The outlet ports in each delivery member are shaped so that the triangular distribution patterns 255 to 257 are further defined thereby. Therefore, for example, the outlet ports 103 and 104 shown in Figures 4 and 8 are smaller, in the radial direction, at the limits of the sector 248 than they are at the proximal larger sides 127. The length 139 of the sides 126 is substantially equal to half the length 140 of the sides 127. The material flowing out of the hopper in the spreading sector 248 will thus arrive at the distribution member in larger amounts, and further from the axis 89, in the middle of the sector 248 than near the planes 128. Therefore, at the limits 244 and 245, 246 and 247 respectively of the spread over the sectors 242 and 243, less material will be spread per unit time than in the middle of these spreading sectors 242 and 243. In this way the formation of the triangular distribution patterns 255, 256 and 257 is enhanced.

The ejection blades 67 extend to near the circumference of the distribution members and the carrying surfaces 60 of the distribution members extend as complete discs up to the circumference of the distribution members. These discs provide a satisfactory support for the material. The surfaces 60 slope upwardly from the middle at a small angle 55 of preferably about 7° in the present embodiment. Thus the material is ejected slightly upwards. This has an advantageous effect on the spreading distance. The ejection blades 67 extend to near the circumference of the floor member 96 so that the ends of the ejection blades nearer the rotary axes are located below the lower edges 137 of the outlet ports. The material emanating from the outlet ports can thus be very rapidly engaged by the ejection blades and be guided to the circumference of the distribution members for spreading. In this way the locations of the spreading sectors 242 and 243 are effectively influenced so that these spreading sectors have a substantially constant position irrespective of the kind of material to be spread. This is particularly important for fertilizer distributors. Fertilizer distributors are used on different kinds of soil and in different periods of a year for different crops. The fertilizer dispensers must, therefore, be generally capable of spreading different kinds of material. The various kinds of material can all be spread in substantially the same directions by the distribution members.

A smooth flow of material through the outlet ports and a satisfactory reception by the distribution members with the ejection blades are also enhanced by the diverging positions of the wall 197 and the receiving surface 59 in the direction away from the axis 86.

A satisfactory reception of the material by the ejection blades is also ensured by the shape of these ejection blades. The ejection blades are shown in a vertical sectional view in Figures 5 and 6. Each ejection blade has a side 75 which is at an angle 76 of about 60° to a plane at right angles to the rotary axis 86. In this position the material emanating from the outlet ports is effectively picked up, whilst the influence of the ejection blades on the outflow is at a minimum. A satisfactory guidance and pick-up of the material is further more assured by the height of the blade. At the circumference of the distribution member the ejection blade has a height of about 55 mms, measured at right angles to the surface 60. This height is measured near the lowermost point of the ejection blade, that is to say, on the circle 62 and is about 70 mms. Each of the ejection blades can capture large amounts of material, since they have a side 78 normal to the surfaces 66 and 59 as will be apparent from Figures 5 and 6. The height 90 of the part 78 is largest near the circle 62 and decreases towards the outer ends of the ejection blades, since the folding line 260 is parallel to a plane at right angles to the rotary axis 86. The sides 75 of the ejection blades, as viewed on plane (Figure 4), are curved along a circle lying in a plane normal to the rotary axis 59. The part 78 is curved in the direction of length of a blade along an identical circle lying, however, in a plane at an angle to the axis 86 equal to the angle 55 (Figure 7).

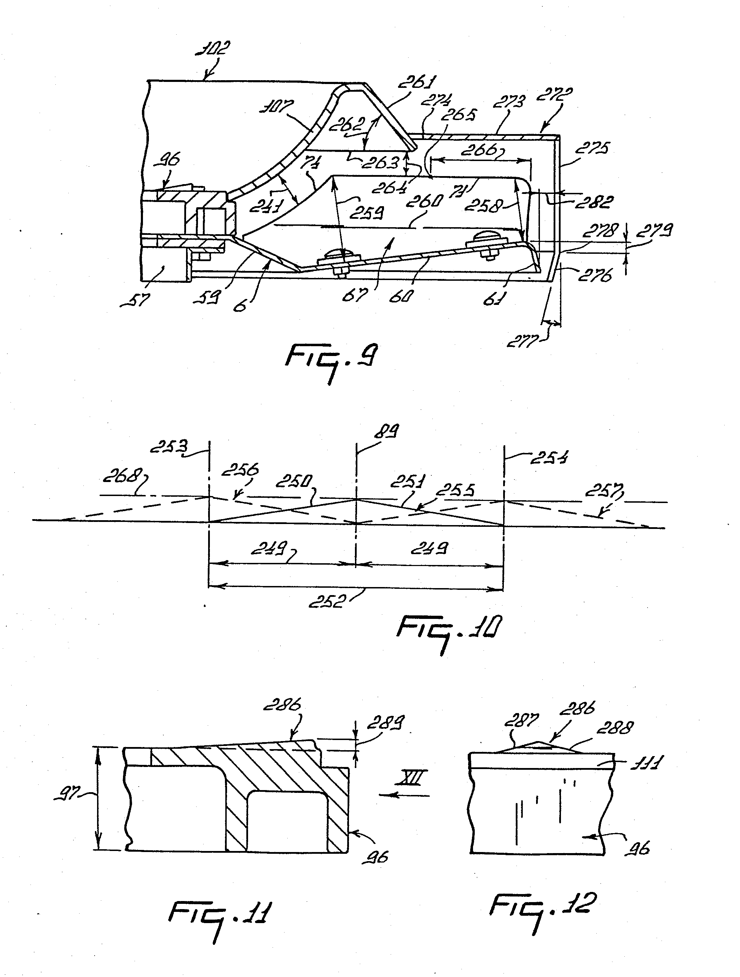

During rotation of the distribution members and the flow of material through the outlet ports the material can strike the ejection blades so that it is thrown slightly upwards. In order to ensure that such ejected material is caught by the blades in a satisfactory manner, a deflector hood 261 (Figure 9) is provided above the distribution members. This hood extends above the outlet ports to near the wall 107. In this embodiment the hood 261 is rigidly secured to the top edge of the wall 107 and the delivery member 101. From the top edge 110 of the delivery member 101 the hood slopes downwardly at an angle 262 of about 40° to a plane at right angles to the axis 86. The hood extends downwardly away from the axis 86. The distance 264 of the lower edge 263 of the hood 261 from the top edges of the ejection blades is preferably not more than about 40 mms. The deflector hood 261 is preferably positioned such that a projection of its inner face intersects the top edge 71 on a circle 265 which is a distance 266 from the outer ends of the ejection blades. Thus material particles striking the hood will be diverted towards the ejection blades. For this purpose the distance 264 is not too large; in the illustrated embodiment it is about 25 mms. Because the ejection blades receive the material diverted from the hood at a position approximately at the distance 266 from their ends, the material is still satisfactorily guided to be spread in the desired manner. The deflector hood 261 covers substantially centrally an angle of 360° about the rotary axis 86 and the whole circumference is conical with a vertex angle of about 40°.

That part of the circumference of each of the distribution members which is located outside the spreading sectors 242 and 243 respectively is surrounded by cover members 270 and 271. The cover members 271 and 272, as is shown in particular in Figure 9 for the cover member 271, comprise a top panel 273 which is at a higher level above the distribution members than is the lower edge 263 of the deflector hood 261. The inner edge 274 of the top panel 273 is a short distance from the outer circumference of the hood 261 so that no grains of material can escape upwardly between the hood 261 and the top panel 273. The cover member 272 has, at its outer periphery, a downwardly extending skirt 275, which is parallel to the rotary axis 86 of the distribution member and at right angles to the panel 273, which is normal to the axis 86. The lower edge of the guide wall 278 is provided with an inturned lip 276. This lip 276 is bent over inwardly so that it slopes downwardly and inwardly towards the rotary axis 86 at an angle 277 of about 15° to the vertical. The folding line 278, where the lip 276 meets the skirt 275 is at a distance 279 lower than the lower edge of the outer end of a blade 67 and than the top of the periphery of the plate 60. The distance 279 is preferably not more than a few millimetres.

The folding line 278 is preferably at a higher level than the lower edge of the rim 61. The top panel 273 covers an angle of about 180° around the rotary axis 86. The downwardly extending skirt 275 subtends a slightly smaller angle of about 155° around the rotary axis 86. One end of the skirt 275 is approximately in the plane 88. The end of the skirt 175 lying in the plane 88 is in front of the distribution members with respect to the normal direction of travel 10 and in front of the outlet ports in the respective delivery member. Thus, with respect to the direction 10, the outlet ports are in front of the rotary axes of the distribution members and hence in front of a plane containing the rotary axes of the two distribution members. The ends of the skirts 275 are both located at substantially equal distances from the ends of the top panel 273, that is to say, by an angle 280 of about 15°. The top panel 273 of the cover member 272 deflects any particles which are not captured by the blades into reach of the blades and/or the plate 60. The material conducted by the panel 273 towards the blades or the part 60 will be thrown by the distribution member against the skirt 275. The skirt 275, a short distance from the periphery of the distribution member, will guide the material in a circular movement around the axis 86. This circular movement is produced by the manner in which the material is thrown by the distribution member against the skirt 275 and by the movement of the distribution member inside the guide member. The material is carried along on the wall 275 up to the end 281, where it is conducted away in the directions 244 and 246 respectively. The bent-over lip 276 is provided in order toprevent the material from leaving the skirt 275 in a downward direction. This lip 276 constitutes a supporting lip preventing such downward movement so that the material remains in the fold edge 278 on the skirt 275, from where it is guided along the skirt 275 up to the point
281. In this way the material is prevented from
dropping to the ground in the middle of the machine,
which would adversely affect the distribution pattern.
Furthermore the material is thus prevented from
coming into contact with machine parts in an
undesirable manner. For a satisfactory guidance
of the material along the skirt 275, the skirt is
positioned a short distance 280 from the circumference
of the distribution member. This distance 282 is
preferably not larger than about 25 mms.

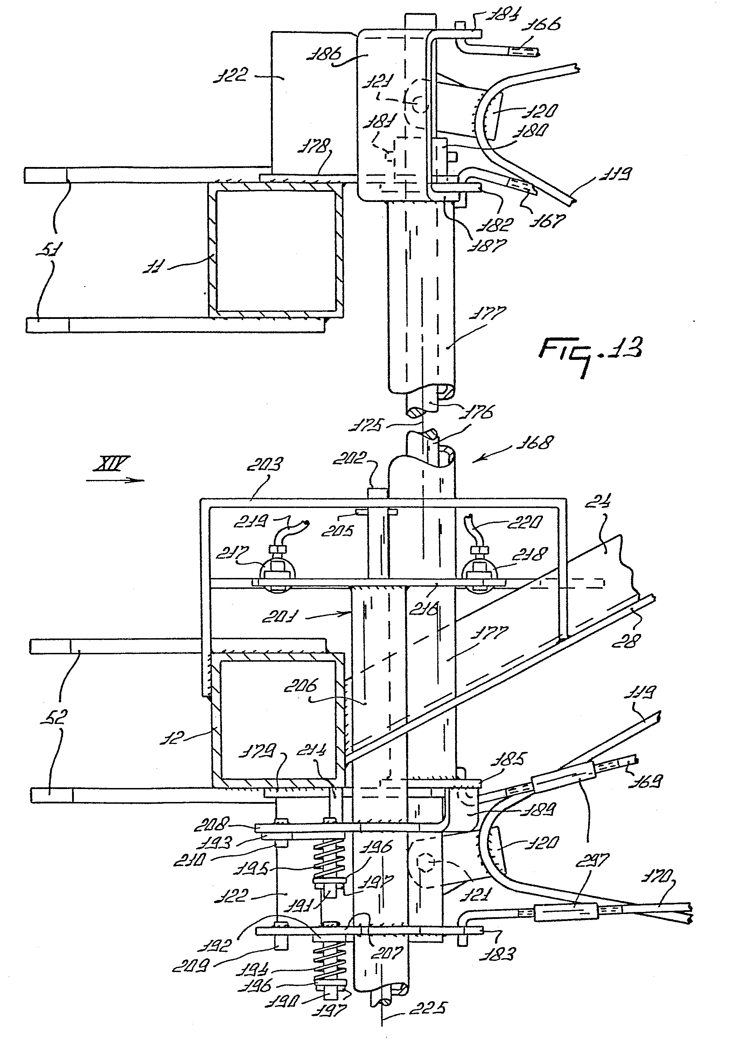

The stream of material passing through the outlet
ports is also affected by the rotating floor 116.
Thus material will not be left on the floor when
the hopper is empty. The material contained in
the hopper will all be effectively delivered through
the outlet ports so that the hopper can be completely
emptied, if desired. Moreover the rotating floor
member 96 effectively maintains movement of the
material at the bottom of the hopper in order to
ensure a satisfactory flow of material through the
outlet ports. For this purpose two pushing blades
285 and 286 are provided on the floor 116. These
blades are aligned diametrically of the rotary axis
86 and are identical to each other. Each of the
blades 285 and 286 has a triangular vertical cross-
section as will be apparent from Figures 11 and
12 for the blade 286. The blade has two inclined
sides 287 and 288 terminating at a point near the
axis 86. At the end furthest from the axis 86
the blade has its largest height 289 of about 5
mms and towards the inner end it terminates at the
floor, as will be apparent from Figure 11.

The size of the passage through the outlet ports
can be controlled by displacing the slides 142 to
145 with respect to the outlet ports so that these
outlet ports 103 to 106 are covered to a greater or lesser extent by the dosing slides. Thus the flow rate of material passing through the outlet ports can be varied. The dosing slides are arranged so that they are located above the outlet ports, when the ports are fully open. In order to prevent the dosing slides from coming into contact with the rim 110, this rim has recesses 292 and 293 (Figure 4). These recesses are covered in the region of the deflector hood 261 by deflector plates 294 and 295. Between the plates there is space for the support 161 and the control plates 158 and 159 with the operating rods connected to them. For closing the outlet ports to a greater or lesser extent the dosing slides can turn about the pivotal shafts 153. The pivotal shafts of each of the dosing slides are arranged so that the dosing slides are movable along the outlet ports in the direction of the arrow 298. The dosing slides are pressed by the resilient arms 151 against the outer face of the wall 107 so that undesirable gaps between the dosing slides and the wall 107 are avoided. Therefore, accurate dosing is possible by causing the slides to cover the outlet ports to a greater or lesser extent. The movement of the dosing slides along the walls 107 is performed very effectively since the dosing slides have the same curvature as the walls 107 so that during their movement along the walls their curvature always accurately matches the curvature of the wall 107. The outlet ports are closed by the downward displacement of the dosing slides and, as the ports become fully closed, the lower edge 150 of the dosing slides will first coincide with the curvature 141. Thus, when small amounts of material are to be delivered, two separate, smaller parts of the outlet ports will remain open. These parts are then bounded by the lower edge 150 and the sides 134 and 126 and 135, 127, respectively.

-31-

The remaining small parts have a sufficient passage
for small flow rates of material. These separate
parts on both sides of the point 141, leaving only
a small passage in the outlet ports, provide the
advantage that these small amounts of material still
delivered per unit time can be fed over substantially
the whole sector angle 248 to the distribution members.
Therefore, even small amounts of material can be
effectively spread by the distribution members over
the entire spreading sectors 242 and 243, the extent
of the spreading sectors 242 and 243 thus remaining
independent of the flow rate of material.

In order to ensure effective guiding of the
material to be spread on the desired sectors, the
ejection blades, as viewed on plan, are positioned
so that their ends lie on the radial line 80. With
respect to the direction of rotation the blades
are forwardly curved from their outer ends along
their entire length in a smooth curve.

The dosing slides can be displaced by the adjusting
mechanism 168. The adjusting mechanism can be operated
by means of the control members 217 and 218, which
are hydraulic members. These members are connected
by hoses 219 and 220 with a control mechanism of
the tractor to which the spreader is attached so
that they can be actuated from the tractor. Although
in this embodiment the adjusting mechanism is
hydraulically actuated by the hydraulic cylinders
217 and 218, it will be obvious that manual actuation
by means of the lever 216 is also possible. For
manual operation the lever can be provided with
a control arm, or the control lever 216 may be operated
by Bowden cables. Operation of the lever 216 causes
turning of the coupling shaft 206 about its centre
line 225. This turning of the coupling shaft 206
causes turning of the control arms 207 and 208.
These control arms can be coupled by the coupling links 192 and 193 with the adjusting shaft 176 and the adjusting tube 177. For this purpose the coupling arms 192 and 193 are fastened to the coupling arms 188 and 189, which are coupled with the shaft 176 and the tube 177 respectively.

Referring to Figure 14, the control arm 208 is coupled by the coupling link 193 with the arm 189. As shown, the couplinglink 192 is fixed in its rest position by the pin 213, and consequently the coupling mechanism 201 is not coupled with the coupling arm 188 and hence not with the shaft 176. However, in a first instance the following description is based on a situation in which the coupling link 192 is coupled with the control arm 207 for which purpose the hole 211 is provided for the pin 209. When the shaft 206 and hence the adjusting shaft 176 and the adjusting tube 177 are turned by the coupling links 192 and 193, the operating rods 166, 167, 169 and 170 will move. These operating rods are connected to the dosing slides 142, 143, 144 and 145 respectively so that these dosing slides are turned about their respective pivotal shafts 153. In dependence on the position of the lifting arm 216 and the coupling shaft 206, each dosing slide will be moved into a given position relative to its outlet port. The position attainable by the coupling shaft 206 about the shaft 225 is determined by the setting mechanism 296 comprising the indexing plate 204 with the arm 221 and the locking pin 224 co-operating with the plate 204. The movability of the stop arm 221 determines the possible angle of turn of the coupling shaft 206. The moveability of the stop arm 221 about the centre line 225 with respect to the frame plate 204 is chosen so that the coupling shaft 206 can be turned between limits corresponding to the position of the dosing slides in which they fully cover the outlet ports

-33-

or leave these ports completely free. When the stop 221 is in contact with the stop 226, as is shown in Figure 1, the outlet ports are completely closed. By operation of the lever 216, the coupling shaft 206 can be turned into the position in which the stop arm 221 is in contact with the stop 224 and its illustrated position. Then the dosing slides leave the outlet ports fully free and are positioned above the edges 130 of the ports. By actuating the hydraulic rams 217 and 218 the coupling shaft 206 can be rapidly turned from the end position against the stop 226 to the end position at the stop 224. In this manner the dosing slides can be very rapidly moved from the open to the closed position by means of the mechanism 217 and 218. When the adjustable locking pin 224 is inserted into a different one of the holes 223, the permissible travel of the stop arm 221 is reduced. When the pin 224 is inserted into a hole 223 located nearer the stop 226 the adjustable stop 224 determines a position in which the dosing slides do not fully clear the ports, but leave a smaller passage through the ports.

Either the adjusting shaft 176 or the adjusting tube 177 may be optionally decoupled from the coupling shaft 206. Figures 13, 14 and 15 show a situation in which the adjusting shaft 176 is not coupled with the coupling member 201 because the coupling link 192 is fixed to the fixing pin 213. Under this condition, the adjusting shaft 176 is fixed in a position in which the dosing slides 143 and 145 coupled with the shaft 176 through the arms 182 and 183 and the rods 167 and 170 close the outlet ports 104 and 106. However, the dosing slides 142 and 144 remain coupled with the coupling member 201 through the adjusting tube 177 and the coupling link 193. Since the dosing slides 143 and 145 keep the outlet ports 104 and 106 closed, material can only flow from the hopper through the outlet ports 103 and 105. Consequently material can flow through only one outlet port to each of the distribution members. The material will thus pass to the distribution members over a sector angle about the rotary axes86 which is equal to substantially half the sector angle 248. As a result, each of the distribution members will spread the material over a sector equal to half the spreading sectors 242 and 243. When the material passes through the outlet ports 103 and 105 the distribution member 5 will spread it only to the left-hand side of the plane of symmetry 89, whereas the distribution member 6 will spread the material also only on the left-hand side of the plane of symmetry 89. In this way the machine will spread material only on one side of the plane of symmetry. It will be obvious that by changing-over the coupling links 192 and 193 so that the coupling link 192 is disengaged from the fixing pin 213 and is coupled with the pin 209 of the control arm 207, whereas the coupling link 193 is disengaged from the pin 210 and fixed to the pin 214, the dosing slides 142 and 144 close the outlet ports 103 and 105 and the dosing slides 143 and 145 remain coupled through the adjusting shaft 176 and the coupling arm 192 with the coupling shaft 206 and the control mechanism for closing the outlet ports 104 and 106 to a greater or lesser extent. As a result, the material is spread only on the right-hand side of the plane of symmetry 89. When both of the coupling links 192 and 193 are coupled with the coupling shaft 206, the four dosing slides are simultaneously actuated. This can result in a distribution pattern 255 of the kind shown in Figure 10. The length of the operating rods 166, 167 and 170 can, if necessary, be adjusted by means of the turnbuckles 297.

The size of the hopper 2 is such that it can contain 1200 kgs of fertilizer or other material. If material has to be spread with a high density coverage, or if material has to be spread over large areas, it may be important to provide the possibility of carrying more material in the hopper. For this purpose the hopper extnesion 231 can be fitted to the hopper 2. The spreader can be readily used as the hopper extension 231 has its walls 235 in line with the top walls 236 of the hopper 2. In this way the hopper extension 231 does not have parts which project laterally with respect to the top of the hopper 2. The rims 234 and 233 are downwardly and inwardly inclined in the same way as the rim 232 so that no material will stick behind these rims when the hopper is being emptied. The hopper extension 231 in the embodiment shown can enlarge the capacity of the hopper so that about 1500 kgs can be carried.

The shape of the outlet ports 104 and 106 and the location in a wall part 107 mainly extending from the middle outwardly in upwardly inclined position and the position of the outlet ports with respect to the distribution members with their ejection blades as described above are such that about 300 kgs of material a minute can pass through the outlet ports in the case of coarse grains. With a large, effective spreading width of about 24 ms and with a travelling speed of about 8 kms/hour, 900 kgs can be spread per hectare without the need for repeating the spreading action, apart from the normal overlap of the distribution patterns as shown in Figure 10. In order to obtain an effective spreading width of 24 ms of a distribution pattern as shown in Figure 10 the two distribution members will spread the material on a maximum width of about 48 ms.

In particular in the case of re-manuring it may be desirable to use the dispenser in a slightly tilted position so that the distribution members are upwardly inclined to the rear, for example, at an angle of 15° to the horizontal plane or the surface to be covered. Even in the case of re-manuring the material can be spread on an effective width of 24 ms. In this inclined position of the machine the outlet ports 104 to 106 occupy a position such that the passage of material through the outlet ports is enhanced.

The large weight of coarse grains that can be passed through the outlet ports is important for spreading the coarse grains over a large distance and hence over a maximum working width. The adjusting shaft 176 and the adjusting tube 177 are arranged at such a height in the frame that the auxiliary shaft linking the shaft 46 to the power take-off shaft of the tractor does not hinder the attachment of the machine to the lifting device and the position of the lifting device with the attached machine.

Owing to the above-mentioned fixed position of the spreading sectors 242 and 243 irrespective of the kind of material to be spread, the outlet ports 103, 104 and 105, 106 can maintain a fixed position in the machine. Therefore, the delivery members 101 and 102 can be simply held in their places between the hopper and the distribution members through the brackets 119. In order to prevent the positioning of the delivery members on the floor members 96 connected with the distribution members from being affected by the movement of the dosing slides, it is advantageous to cause the forces required for moving the dosing slides 142 to 145 to engage the control plates 158 and 159 at the level of the top edges 110. The point of engagement of the operating rods 166, 167, 169, 170 on the control plates 158 and 159 is therefore at the same level as the point of engagement of the brackets on the top edge 110. Forces thus acting on the coupling plates 158 and 159 and hence on the delivery members will not tend to move the delivery members with respect to their fastening points on the brackets 119.

The overlap 117 of the top edges of the delivery members around the lower edges of the lower ends 87 is sufficient to prevent material from flowing between the delivery members and the lower ends 87 and over the edges 110. Therefore the distance 118 is preferably not larger than a few millimetres. The distance 118 is, however, such that enough clearance is left for mounting the hopper on the frame 1 with respect to the delivery members. Mounting of the machine is thus facilitated, in particular, because there is no need for an accurately defined tolerance for the adjoining parts 87 and the delivery members 101 and 102, for these members on the floor members 96 and for the location of the distribution members in the frame. The mounting operations are further simplified because the distribution members 5 and 6 are suspended by the hollow beam 43 and the carrying members 25 and 26 on the support 31, which also at least partly supports the hopper. The distribution members 5 and 6 hence the delivery spouts 3 and 4 are spaced apart by a centre-to-centre distance 82 of about 90 mms. Thus the distribution members are at an advantageous distance from each other so that material spread by one distribution member will not affect the spreading direction of material spread by the other distribution member. Moreover this distance between the delivery spouts 3 and 4 provides an advantageous structure of the hopper.

The structure can be such that a large capacity hopper is obtained, whilst the steepness of the walls is sufficient to ensure a satisfactory flow of material to the delivery members. The large hopper, particularly together with the hopper extension 231, when completely filled, will be heavy. For this purpose the construction of the frame is strong and the lower beams 21 and 22 are connected with the carrying arms 23 and 24.

The construction of the delivery members and of their outlet ports and the construction of the distribution members and their positioning with respect to the delivery members ensure a very effective spreading. Although the construction embodying the invention with its effective spread of material can be particularly successfully used in spreaders comprising two distribution members, this construction of a delivery member and of a distribution member may also be used in dispensers having only one distribution member or in dispensers comprising two distribution members spreading the material mainly on adjacent, partly overlapping strips of land.

Whilst various features of the spreaders that have been described, and that are illustrated in the drawings, will be set forth in the following claims as inventive features, it is to be noted that the invention is not necessarily limited to these feartures and that it encompasses all of the features that have been described both individually and in various combinations.

CLAIMS

1. A spreader comprising a hopper (2) for receiving material to be spread and a distribution member (5,6) which is rotatable about a rotary axis (86), the hopper (2) having at least two outlet ports (103,104; 105,106) which are a short distance (124) apart from each other for supplying material from the hopper (2) to the distribution member (5,6), characterized in that the lengths (133) of adjacent edges (127) of the outlet ports (103, 104; 105,106) are larger than the lengths (139) of the edges (126) of the outlet ports which are remote from each other.

2. A spreader as claimed in claim 1, characterized in that the remote edges (126) of the outlet ports have a length (139) substantially equal to half the length (133) of the adjacent edges (127) of the outlet ports.

3. A spreader as claimed in claim 1 or 2, characterized in that the adjacent edges and remote edges (127, 126) of the ports lie substantially in planes containing the rotary axis (86) of the distribution member (5, 6).

4. A spreader as claimed in any one of the preceding claims, characterized in that the two opposite edges (126, 127) of at least one of the outlet ports (103, 104; 105,106) are connected with one another by a curved top edge (130) defining the furthest extent of the outlet port from the rotary axis (86) of the distribution member (5,6).

5. A spreader as claimed in any one of the preceding claims, characterized in that at least one of the outlet ports (103, 104; 105,106) terminates nearer the rotary axis (86) of the distribution member (5,6) at an inner edge comprising two portions (134, 135) which are inclined to each other and meet each other at a distance from the rotary axis (86) of the distribution member (5,6)

which is greater than the distances between the rotary axis (86) and the junctions of the portions (134, 135) with the respective opposite edges (126, 127).

6. A spreader as claimed in claim 5, characterized in that the radially inner ends of the adjacent edges (127) of the two outlet ports are at least substantially at the same distance as each other from the rotary axis (86).

7. A spreader as claimed in any one of the preceding claims, characterized in that the outlet ports (103, 104; 105, 106) are spaced apart by a distance (124) which is not less than 15 mms and not more than 50 mms.

8. A spreader as claimed in any one of the preceding claims, characterized in that adjacent edges (127) of the outlet ports have a length (140) of about 60 mms.

9. A spreader as claimed in any one of the preceding claims, characterized in that the outlet ports are located in a wall (107) which, at least in the region in which the outlet ports are provided, slopes upwardly inclined away from the rotary axis (86) of the distribution member.

10. A spreader as claimed in any one of the preceding claims, characterized in that the distribution member (5, 6) is provided with a plate element which measured in a direction parallel to the rotary axis (86) of the distribution member, is spaced apart from the outlet ports by a distance of at least about 10 mms.

11. A spreader as claimed in any one of the preceding claims, characterized in that the distribution member (5, 6) is provided with at least one ejection blade (67) whose end nearest the rotary axis (86) lies on a circle centred on the rotary axis (86) and lying below the outlet port (103, 104; 105, 106).

12. A spreader comprising a hopper (2) for receiving material to be spread and a distribution member (5, 6) which is rotatable about a rotary axis (86), the hopper (2) having at least one outlet port (103,104; 105,106) for supplying material from the hopper (2) to the distribution member (5, 6) characterized in that the outlet port (103,104; 105,106) is provided in a wall portion (107) which slopes upwardly from the rotary axis (86) and in that the distribution member (5,6) comprises a plate disposed beneath the outlet port, the lowermost edge of the outlet port being at least about 10 mms from the plate, and the distribution member further comprising at least one ejection blade (67) whose end nearest the rotary axis (86) lies substantially on a circle centred on the rotary axis (86) of the distribution member, part of this circle lying directly below the outlet port.

13. A spreader as claimed in any one of the preceding claims, characterized in that the outlet port or ports which open out above the or each distribution member (5,6) lie within a sector having an angle of about 100° at the rotary axis (86) of the distribution member.

14. A spreader as claimed in any one of the preceding claims, characterized in that the outlet port (103,104; 105,106), or at least one of them, is provided in a curved wall portion (107), the concave face of which faces into the interior of the hopper (2).

15. A spreader as claimed in claim 14, characterized in that the wall portion (107) having the or each outlet port (103,104; 105,106) is an annular wall portion extending around the rotary axis (86) of the distribution member (5,6) and comprising at least mainly part of a sphere whereby points on the inner surface of the wall portion (107) are the same distance (108) as each other from a point (109) on the rotary axis (86) of the distribution member.

16. A spreader as claimed in any one of the preceding claims, characterized in that a capturing portion (59) of the distribution member is disposed below the outlet port or ports (103,104; 105,106) and has at least mainly a conical shape, sloping downwardly away from the axis (86).

17. A spreader as claimed in claim 16, characterized in that the conical portion (59) has a radial width which is substantially equal to the radial width of the or each outlet port (103,104; 105,106).

18. A spreader as claimed in claim 16 or 17, characterized in that the conical capturing portion (59) has a diameter (84) equal to about one third of the diameter (83) of the distribution member.

19. A spreader as claimed in any one of the preceding claims, characterized in that the distribution member (5,6) comprises a conical carrying portion (60) which slopes upwardly towards the periphery of the distribution member.

20. A spreader as claimed in claim 19, characterized in that the carrying portion (60) of the distribution member is inclined at an angle (55) of about 7° to a plane normal to the rotary axis (86) of the distribution member.

21. A spreader as claimed in any one of the preceding claims, characterized in that the distribution member has a diameter (83) of about 58 cms.

22. A spreader as claimed in any one of the preceding claims, characterized in that the distribution member (5,6) is provided with at least one ejection blade (67) extending to a position near the periphery of the distribution member.

23. A spreader as claimed in any one of the preceding claims, characterized in that the distribution member is provided with at least one ejection blade (67), the top edge (71) of which extends substantially parallel to the hopper wall (107) in the region of the portion of the hopper wall provided with the outlet port or ports (103, 104; 105, 106).

24. A spreader as claimed in claim 23, characterized in that the top edge (71) of the ejection blade (67) extends away from the outlet port or ports at right angles to the rotary axis (86) of the distribution member.

25. A spreader as claimed in claim 24, characterized in that the top edge of the ejection blade (67) lies in a plane going at least approximately through the centre of the outlet port.

26. A spreader as claimed an any one of claims 22 to 25, characterized in that the ejection blade (67) has a maximum height of about 70 mms.

27. A spreader as claimed in any one of claims 22 to 26, characterized in that, at the periphery of the distribution member, the ejection blade (67) has a height of about 55 mms.

28. A spreader as claimed in any one of the preceding claims, characterized in that the distribution member (5, 6) comprises a central portion (58, 96) which at least partly constitutes the floor of the hopper (2) and the circumference of which is adjoined by the wall portion (107) having the outlet ports (103, 104; 105, 106).

29. A spreader as claimed in claim 28, cnaracterized in that between the wall portion (107) having the outlet port or ports and the portion (58) of the distribution member (5, 6) disposed beneath the outlet port or ports, a cylindrical member (96) meets the wall portion (107) at a position near the underside of the outlet port or ports.

30. A spreader as claimed in claim 29, characterized in that the cylindrical member (96) is rigidly secured to the distribution member (5,6).

31. A spreader as claimed in claim 29 or 30, characterized in that the cylindrical member (96) has a surface (118) which is closed at the top to constitute the floor of the hopper (2).

32. A spreader as claimed in any one of claims 29 to 31, characterized in that, at the end nearer the rotary axis (86) of the distribution member (5, 6), an ejection blade (67) is disposed near the circumference of the cylindrical member (96).

33. A spreader as claimed in any one of the preceding claims, characterized in that, as viewed in a direction parallel to the rotary axis (86) of the distribution member (5, 6), an ejection blade (67) of the distribution member is curved smoothly with its concave side facing in the normal intended direction of operative rotation (91, 92) of the distribution member.

34. A spreader as claimed in claim 33, characterized in that the ejection blade (67) is curved so that the end of the ejection blade (67) furthest from the rotary axis (86) of the distribution member extends radially of the rotary axis (86).

35. A spreader as claimed in claim 34, characterized in that the ejection blade (67) is curved from the end furthest from the rotary axis (86) towards the front with respect to the intended direction of operative rotation (91, 92) of the distribution member, the inner end of the blade (67) lying in front of a radical line passing through the outer end of the ejection blade (67).

36. A spreader as claimed in any one of the preceding claims, characterized in that, as viewed in cross-section, an ejection blade (67) of the distribution member (5, 6) has a wall portion (78) which is parallel to the rotary axis (86) of the distribution member and which meets an inclined portion (75) which slopes upwardly and forwardly with respect to the intended direction of operative rotation (91, 92) of the distribution member at a distance (90) above a carrying portion (60) of the distribution member.

37. A spreader as claimed in claim 36, characterized in that the junction (260) between the inclined portion (75) and the parallel wall portion (78) of the blade (67) extends parallel to a plane at right angles to the rotary axis (86) of the distribution member in a manner such that the height of the parallel wall portion (78) decreases towards the radially outer end of the blade.

38. A spreader as claimed in any one of claims 35 to 37, characterized in that the ends of the ejection blade (67) subtend an angle (79) of about 30° at the rotary axis (86) of the distribution member.

39. A spreader as claimed in any one of the preceding claims, characterized in that a deflector hood (261) is provided above the distribution member (5, 6) and slopes downwardly and radially outwardly with respect to the rotary axis (86) of the distribution member.

40. A spreader as claimed in claim 39, characterized in that the top of the deflector hood (261) meets a wall portion of the hopper (2).

41. A spreader as claimed in claim 39 or 40, characterized in that the deflector hood (261) extends substantially 360° around the rotary axis (86) of the distribution member, the lower edge of the deflector hood (261) being at a distance (263) from the uppermost part of the distribution member, which distance (263) is not greater than about 35 mms.

42. A spreader as claimed in any one of claims 39 to 41, characterized in that a surface containing the inner face of the deflector hood (261) intersects the top edge of an ejection blade (67) of the distribution member at a distance (266) from the end of the ejection blade.

43. A spreader as claimed in any one of claims 39 to 42, characterized in that the deflector hood (261) is fixed to the top of a wall portion (107) having the outlet port or ports and being separate from the further part of the hopper (2).

44. A spreader as claimed in any one of claims 39 to 43, characterized in that the deflector hood (261) is at an angle (262) of about 40° to a plane perpendicular to the rotary axis (86) of the distribution member.

45. A spreader as claimed in any one of the preceding claims, characterized in that the hopper (2) comprises a wall portion (107) in which the or each outlet port is provided, the wall portion (107) extending around the lower end of a delivery spout (3, 4) of the hopper (2), the top of the wall portion (107) being spaced from the lower end of the delivery spout (3, 4).

46. A spreader as claimed in any one of the preceding claims, characterized in that around at least part of the periphery of the distribution member is provided a cover member (271, 272), the lower edge of which is lower than the underside of the radially outer end of an ejection blade (67) of the distribution member disposed near the periphery of the distribution member, the cover member (271,272) having a lip (276) which is inclined downwardly and towards the rotary axis (86) of the distribution member.

-47-

47. A spreader as claimed in claim 46, characterized in that the lip (276) is at an angle (277) of about 15° to the rotary axis (80) of the distribution member.

48. A spreader as claimed in claim 46 or 47, characterized in that the cover member (271, 272) is provided with a deflecting panel (273) extending above the distribution member (5, 6) and which terminates at an inner edge (274) near the deflector hood (261).

49. A spreader as claimed in any one of claims 46 to 48, characterized in that the cover member surrounds a part of the distribution member (5, 6) from which in operation substantially no material is intended to be ejected by the distribution member.

50. A spreader as claimed in any one of the preceding claims, characterized in that a dosing slide (142, 143, 144, 145) is disposed at the or each outlet port (103, 104; 105, 106), the dosing slide being movable with respect to a wall part in which the outlet port is provided and being fixable selectively in any one of a plurality of positions with respect to the wall part for closing the outlet port to a greater or lesser extent.

51. A spreader as claimed in claim 50, characterized in that at least two dosing slides (142, 143; 144, 145) are adjustably connected with an adjusting mechanism (168) in a manner such that at least one of the dosing slides can be retained in a rest position during operation of the adjusting mechanism to adjust the other dosing slide.

52. A spreader as claimed in any one of the preceding claims, characterized in that two distribution members (5,6) are provided, at least one outlet port (103,104; 105,106) being provided for supplying material to the distribution members, the distribution members being rotatable in operation in opposite senses (91, 92), the outlet port or ports being disposed and the distribution members (5,6) being formed in a manner such that, in operation, the distribution members (5,6) spread material over the same strip of land as each other and, as viewed on plan, each distribution member spreads the material symmetrically with respect to the other distribution member and with respect to a plane (89) passing centrally between the distribution members, lying parallel to their rotary axes (86) and extending in the normal intended direction of operative travel (10) of the spreader.

53. A spreader as claimed in claim 52, characterized in that each of the distribution members is provided with a cover member (271, 272), the cover members (271, 272) being disposed mainly on those sides of the distribution members (5, 6) which face each other.

54. A spreader as claimed in any one of claims 44 to 53, characterized in that the cover member (271,272) comprises a guide wall (275), one end (281) of which lies in a vertical plane (88) containing a rotary axis (86) of the distribution member concerned and extending in the intended direction of travel (10).

55. A spreader as claimed in claim 54, characterized in that the ends of the guide wall (275)subtend an angle of about 150° at the rotary axis (86).

56. A spreader as claimed in any one of claims 44 to 55, characterized in that the cover member (271, 282) comprises a deflecting panel (273) the ends of which subtend an angle of substantially 180° at the rotary axis (86) of the distribution member, the ends of the deflecting panel being spaced from the ends of the guide wall (275).

57. A spreader as claimed in any one of the preceding claims, characterized in that the hopper (2) has a set of two outlet ports (103,104; 105,106) disposed above each of the two distribution members (5,6) each outlet port co-operating with a dosing slide (142,143,144,145) coupled with an adjusting mechanism (168), one of the two dosing slides located above each distribution member being coupled with one part of the adjusting mechanism, and the other dosing slide being coupled with a further part of the adjusting mechanism, these parts being disengageable independently of each other from an operating member of the adjusting mechanism in a manner such that material may be passed selectively either through all outlet ports or through one only of the two outlet ports of each set during operation of the spreader.

58. A spreader as claimed in claim 57, characterized in that two dosing slides (143, 145) are coupled with an adjusting shaft (176) and the other two dosing slides (142, 144) are coupled with an adjusting tube (177) which is movable around the adjusting shaft (176), the shaft (176) and the tube (177) being relatively rotatable and being connectable independently of each other with a coupling mechanism (201) of the adjusting mechanism (168), the coupling mechanism (201) being movable by an actuating member (217,218).

59. A spreader as claimed in claim 58, characterized in that the adjusting shaft (176) and the adjusting tube (177) can be coupled by means of coupling links (192, 193) with control arms (207, 208) of the coupling mechanism (201), the coupling links (192, 193) being releasably coupled with the control arms (207, 208) and being fixable with respect to a frame of the spreader.

60. A spreader as claimed in claim 59,

-50-

characterized in that the coupling mechanism (201) comprises a lever (216) connected with a rotatable coupling shaft (202) on which the control arms (207, 208) are mounted.

61. A spreader as claimed in any one of claims 58 to 60, characterized in that the control mechanism (201) comprises remotely controllable means, for example a hydraulic mechanism.

62. A spreader as claimed in any one of the preceding claims, characterized in that the adjusting mechanism (168) is disposed in front of the hopper (2) on a frame of the spreader at a level higher than the wall parts (107) having the outlet ports (103, 104; 105, 106).

63. A spreader as claimed in any one of claims 57 to 62, characterized in that the dosing slides (142, 143, 144, 145) are provided with control rods (155, 157) which are coupled through the intermediary of control plates (158, 159) with operating rods (166, 167) at the level of the top edge of the wall parts, which are also engaged by fixing members by which the wall parts can be fixed in the desired position relative to the frame.

64. A spreader as claimed in any one of the preceding claims, characterized in that the hopper (2) is supported at least partly by a frame support (11, 12, 13) on which carrying members (15, 16) for the distribution members (5, 6) with their driving means (43, 45, 47, 48) are mounted.

65. A spreader as claimed in any one of the preceding claims, characterized in that the hopper (2) is fastened to a horizontal frame beam (13) at the front of the spreader, which beam (13) is rigidly secured to two vertical posts (11,12) provided with fastening members (51, 52) for attaching the spreader to the lifting device of a tractor or a similar vehicle.

66.   A spreader as claimed in claim 64 or 65, characterized in that the vertical posts (11, 12) are provided with carrying arms (23, 24) to which the hopper support is fastened, the ends of the carrying arms (23, 24) being connected with lower beams (15, 16) disposed below the distribution members (5, 6).

67.   A spreader as claimed in any one of the preceding claims, characterized in that below the distribution members (5, 6) are disposed forwardly diverging lower beams (15, 16), the front ends of which are fastened to vertical posts (11, 12), said diverging lower beams (15, 16) being interconnected by struts (21, 22), one end of which is coupled with the posts (11, 12) near the fastening area of the lower beams (15, 16).

68.   A spreader as claimed in any one of the preceding claims, characterized in that a hopper extension (231) is provided, having walls in line with upwardly converging upper parts (236) of the hopper (2).

69.   A spreader as claimed in claim 68, characterized in that the hopper extension (231) can be fastened by clamping hooks (237) to the top rim (232) of the hopper (2).

FIG.1

FIG.2

FIG.3

FIG.4

FIG.5

FIG.6

FIG.7

FIG.8

FIG.9

FIG.10

FIG.11

FIG.12

FIG.13

FIG. 14

FIG.15